(19) Europäisches Patentamt
European Patent Office
Office européen des brevets

(11) Numéro de publication : **0 331 568 B1**

(12) **FASCICULE DE BREVET EUROPEEN**

(45) Date de publication du fascicule du brevet :
27.12.91 Bulletin 91/52

(51) Int. Cl.⁵ : **B25J 21/00, A44B 19/26,**
**G05G 1/04, F16J 15/00**

(21) Numéro de dépôt : **89400540.4**

(22) Date de dépôt : **27.02.89**

(54) **Dispositif de communication entre deux milieux séparés par une paroi fendue et traversée par un bras, notamment de télémanipulation.**

(30) Priorité : **02.03.88 FR 8802636**

(43) Date de publication de la demande :
**06.09.89 Bulletin 89/36**

(45) Mention de la délivrance du brevet :
**27.12.91 Bulletin 91/52**

(84) Etats contractants désignés :
**BE DE GB IT NL**

(56) Documents cités :
**FR-A- 2 226 888**
**FR-A- 2 417 954**
**US-A- 2 627 097**
**US-A- 2 809 411**
**US-A- 3 428 272**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Lazzari, Jean-Pierre**
**45 Chemin de Malanot**
**F-38700 Corenc (FR)**

(74) Mandataire : **Mongrédien, André et al**
**c/o BREVATOME 25, rue de Ponthieu**
**F-75008 Paris (FR)**

## Description

La présente invention se rapporte à un dispositif de communication entre deux milieux séparés par une paroi fendue à travers laquelle passe un bras de préhension ou de télémanipulation.

La manipulation et le déplacement automatique d'objets dans des enceintes ultra-propres, notamment pour l'industrie des semi-conducteurs, impose de placer les moteurs et les mécanismes de transmission de mouvement, qui soulèvent beaucoup de poussières par leurs vibrations, hors des enceintes en question. On les place donc derrière une paroi qui délimite le volume ultra-propre ; une fente est établie dans cette paroi pour permettre à un bras de passer.

Dans le cas d'un bras soumis à des translations perpendiculairement à son axe, on est en présence d'une fente allongée qui pose de sérieux problèmes d'étanchéité. S'il est nécessaire de maintenir une surpression dans l'enceinte ultra-propre pour établir un courant d'air vers l'extérieur et faire ainsi obstacle aux impuretés et aux poussières, la surface de communication ne doit cependant pas être excessive car la ventilation devient alors dispendieuse.

Une solution souvent employée consiste à joindre les contours de la fente et le bras par une membrane déformable, ce qui provoque malgré tout toujours l'apparition de poussières par les déplacements de la membrane ainsi que des limitations mécaniques aux mouvements du bras et, à long terme, une usure par fatigue de la membrane.

Le brevet français n°2226888 décrit une membrane formée de deux lèvres jointives pour recouvrir une fente. Les bordures des lèvres sont jointes grâce à des sections à tenon et mortaise capables de s'emboîter ou encore grâce à des aimants de signes opposés. Un curseur coulisse entre les bordures et les écarte localement en les enserrant dans des glissières. Il s'agit en fait d'une double fermeture Eclair. Ce dispositif n'est toutefois pas applicable au domaine technique de l'invention car il implique d'importants contacts mécaniques qui font encore apparaître des poussières.

L'invention a pour objet un dispositif qui ferme l'essentiel de la fente et ne l'ouvre que localement à l'endroit où se trouve le bras, et ceci sans contact avec ce dernier, avec des déformations limitées du dispositif.

Cet objectif est atteint à l'aide d'un joint d'étanchéité qui recouvre la fente et qui est composé de deux lèvres fixées à la paroi de la fente. Chacune de ces lèvres a une bordure garnie d'aimants, les bordures étant face à face et les aimants s'attirant pour joindre les bordures et refermer la fente. De façon caractéristique le bras est lui aussi muni d'aimants, mais qui repoussent les aimants des lèvres pour écarter localement celles-ci. Tout contact mécanique entre les lèvres et le bras est donc évité et de plus la faible ouverture créée constitue un excellent orifice de sortie de l'air en surpression de l'enceinte ultra-propre.

Avantageusement, la section du bras est oblongue et sa plus grande extension est parallèle aux lèvres, ce qui permet de moins les déformer en les écartant.

L'invention va maintenant être décrite à l'aide des figures annexées à titre illustratif et non limitatif, dont l'énumération est la suivante :

— la figure 1 est une vue en coupe partielle de l'invention,

— la figure 2 est une vue de l'invention dans laquelle la paroi et la fente sont vues de face, et

— la figure 3 est une autre réalisation de l'invention.

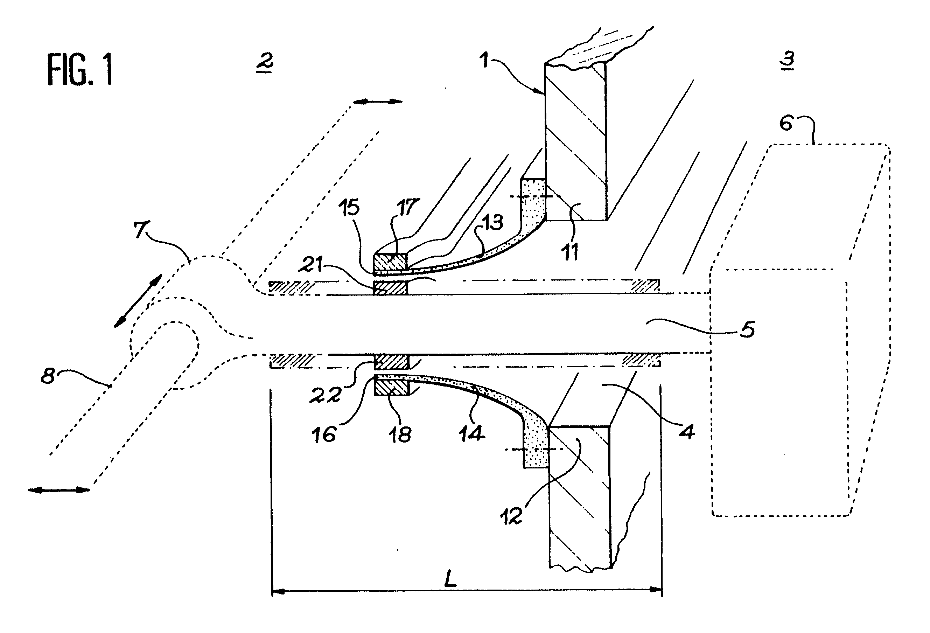

Sur la figure 1, une paroi 1 isole deux volumes : un volume non propre 2 et un volume ultra-propre 3. La paroi 1 est entaillée d'une fente 4 par laquelle passe un bras 5 qui s'étend donc dans les deux volumes 2 et 3. Le bras 5 est terminé dans le volume ultra-propre 3 par une pince 6 ou tout objet analogue qui lui permet de saisir ou de déplacer des objets présents dans le volume ultra-propre 3. Le bras 5 coulisse par son autre extrémité 7 sur une glissière 8 parallèle à la fente 4.

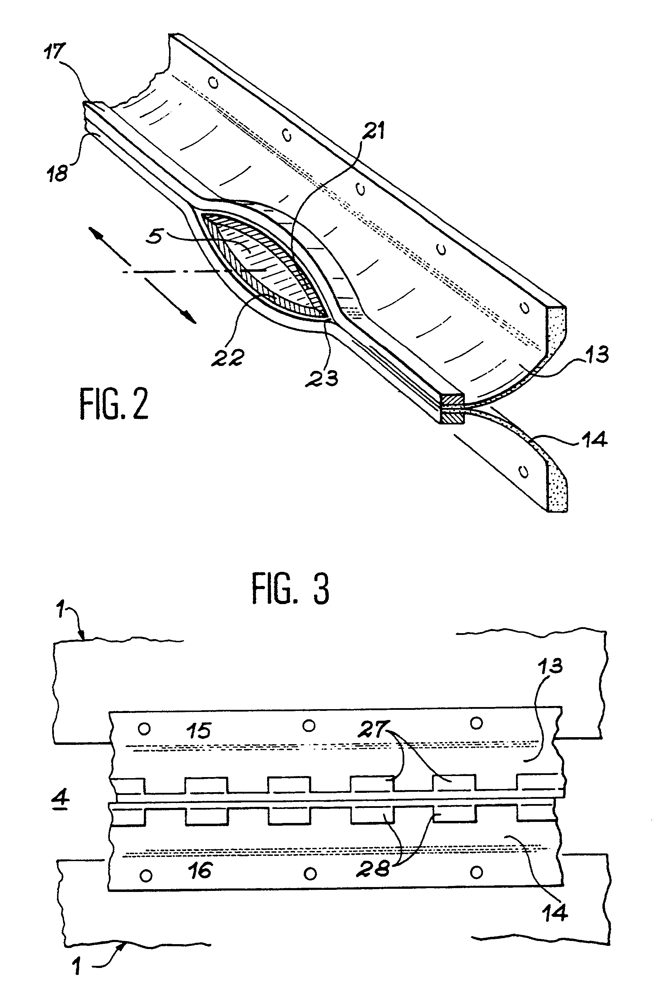

Le contour supérieur 11 et le contour inférieur 12 de la fente 4 sont chacun pourvu d'une lèvre souple en feuillard métallique ou en feuilles de plastique, référencées 13 pour la lèvre supérieure et 14 pour la lèvre inférieure et munies chacune d'une bordure 15 ou 16 parallèle à la fente 4 ; chaque bordure 15 ou 16 est munie d'aimants 17 ou 18, les aimants 17 de la lèvre supérieure 13 attirant les aimants 18 de la lèvre inférieure 14. La condition normale des lèvres 13 et 14 est donc la fermeture de la fente 4 par suite du contact entre les bordures 15 et 16, comme on le voit bien sur la figure 2.

Le bras 5 passe entre les lèvres 13 et 14 et les écarte donc localement. Il est muni d'aimants 21 et 22 sur ses surfaces extérieures supérieure et inférieure. Les aimants 21 sur sa surface supérieure repoussent les aimants 17 de la lèvre supérieure 13, et les aimants 22 sur sa surface inférieure repoussent les aimants 18 de la lèvre inférieure 14. Les lèvres 13 et 14 s'ouvrent donc autour du bras 5, avec un léger jeu 23 autour de celui-ci. Quand le bras 5 se déplace sur sa glissière 8, les lèvres 13 et 14 s'ouvrent progressivement d'un côté tout en se refermant de l'autre. Les aimants 21 et 22 sur le bras 5 permettent ainsi de lui éviter tout contact avec les lèvres 13 et 14 qui produirait des frottements sur les lèvres 13 et 14. Le jeu 23 est réduit, ce qui permet de maintenir la propreté du volume ultra-propre 3 uniquement avec une soufflerie de puissance réduite.

On notera que les lèvres 13 et 14 ne prolongent pas la paroi 1, mais convergent en s'étendant plutôt à l'intérieur du volume non propre 2, perpendiculairement à la paroi 1, ce qui limite les déformations des lèvres 13 et 14 quand le bras 5 les écarte.

La section du bras 5 est de préférence oblongue avec sa plus grande longueur parallèle aux lèvres 13 et 14. Ceci contribue également à limiter les déformations que les lèvres 13 et 14 subissent lors du passage du bras 5.

Les aimants 17 et 18 représentés jusqu'ici sont des bandes continues souples. Il est toutefois parfaitement possible de remplacer ces bandes souples par des blocs aimantés discontinus 27 sur la bordure supérieure 15 et 28 sur la bordure inférieure 16. C'est ce que représente la figure 3. Les aimants 27 et 28 sont disposés face à face et s'attirent pour joindre les bordures 15 et 16. Le fonctionnement est identique à celui de la réalisation avec des aimants 17 et 18 continus.

Les aimants 21 et 22 qui recouvrent le bras 5 peuvent de même être continus ou discontinus.

On peut finalement adapter le dispositif à des mouvements axiaux du bras 5 consécutifs par exemple à un déplacement de la glissière 8. Il suffit de prolonger les aimants 21 et 22 sur une longueur L (figure 1) compatible avec la course axiale du bras 5.

## Revendications

1. Dispositif de communication entre deux milieux (2, 3) séparés par une paroi (1) présentant une fente (4) par laquelle passe un bras (5), la fente (4) étant munie d'un joint d'étanchéité composé de deux lèvres (13, 14) fixées à la paroi (1) et comprenant chacune une bordure (15, 16) munie d'aimants (17, 18), les bordures (15, 16) étant face à face et les aimants (17, 18) des deux bordures s'attirant pour joindre les bordures (15, 16) et refermer la fente (4), caractérisé en ce que le bras (5) est muni d'aimants (21, 22) repoussant les aimants des bordures pour écarter localement les lèvres (13, 14) autour du bras (5).

2. Dispositif de communication entre deux milieux selon la revendication 1, caractérisé en ce que le bras (5) a une section oblongue, allongée parallèlement aux lèvres (13, 14).

3. Dispositif de communication entre deux milieux selon l'une quelconque des revendications 1 ou 2, caractérisé en ce que les aimants des bordures (15, 16) sont des bandes souples (17, 18) continues.

4. Dispositif de communication entre deux milieux selon l'une quelconque des revendications 1 ou 2, caractérisé en ce que les aimants des bordures (15, 16) sont des blocs discontinus (27, 28).

## Patentansprüche

1. Verbindungseinrichtung zwischen zwei Umgebungen (2, 3), die durch eine Wand (1) voneinander getrennt sind, die einen Schlitz (4) aufweist, durch den ein Arm (5) verläuft, wobei der Schlitz (4) mit einer Dichtung versehen ist, die aus zwei Lippen (13, 14) besteht, die an der Wand (1) befestigt sind und jeweils einen Rand (15, 16) aufweisen, der mit Magneten (17, 18) versehen ist, wobei die Ränder (15, 16) einander gegenüberstehen und die Magnete (17, 18) der zwei Ränder sich anziehen, um die Ränder (15, 16) zu verbinden und den Schlitz (4) zu verschließen, dadurch gekennzeichnet, daß der Arm (5) mit Magneten (21, 22) versehen ist, die die Magneten der Ränder abstoßen, um die Lippen (13, 14) um den Arm (5) örtlich abzuheben.

2. Verbindungseinrichtung zwischen zwei Umgebungen nach Anspruch 1, dadurch gekennzeichnet, daß der Arm (5) einen länglichen Querschnitt hat, der parallel zu den Lippen (13, 14) langgestreckt ist.

3. Verbindungseinrichtung zwischen zwei Umgebungen nach einem der Ansprüche 1 oder 2, dadurch gekennzeichnet, daß die Magneten der Ränder (15, 16) weiche durchgehende Bänder (17, 18) sind.

4. Verbindungseinrichtung zwischen zwei Umgebungen nach einem der Ansprüche 1 oder 2, dadurch gekennzeichnet, daß die Magneten der Ränder (15, 16) unterbrochene Blöcke (27, 28) sind.

## Claims

1. Device for communicating between two media (2, 3) separated by a wall (1) having a slot (4) through which passes an arm (5), slot (4) being provided with a packing constituted by two lips (13, 14) fixed to wall (1) and in each case having a border or edge (15, 16) provided with magnets (17, 18), edges (15, 16) facing one another and magnets (17, 18) of the two edges having an attracting action to join said edges (15, 16) and close slot (4), characterized in that arm (5) is provided with magnets (21, 22) moving the magnets away from the edges in order to locally separate lips (13, 14) around arm (5).

2. Device for communicating between two media according to claim 1, characterized in that arm (5) has an oblong section elongated parallel to lips (13, 14).

3. Device for communicating between two media according to claims 1 or 2, characterized in that the magnets of edges (15, 16) are continuous flexible strips (17, 18).

4. Device for communicating between two media according to claims 1 or 2, characterized in that the magnets of edges (15, 16) are discontinuous blocks (27, 28).

FIG. 1

EP 0 331 568 B1

FIG. 2

FIG. 3